# EUROPEAN PATENT SPECIFICATION

(11) **EP 1 180 428 B1**
(45) Date of publication and mention of the grant of the patent: **06.07.2005**
(21) Application number: 00307022.4
(22) Date of filing: 16.08.2000
(51) Int. Cl.: B29D 11/00, B29C 43/18, G02B 3/08

(54) **Method for Manufacturing a Plastic Optical Component**
Verfahren zur Herstellung von einem optischen Gegenstand aus Kunststoff
Procédé pour la Fabrication d'un élément optique en Polymère

(43) Date of publication of application: 20.02.2002
(73) Proprietor: Prodisc Technology Inc., Hsin-Chuang City, Taipei (TW)
(72) Inventor: Hsu Tony, Hsin-Chuang City, Taipei Taiwan, ROC (TW)
(74) Representative: O'Connell, David Christopher

(56) References cited:
- FR-A- 1 390 512
- US-A- 3 594 457
- US-A- 5 702 819
- US-A- 5 903 399
- PATENT ABSTRACTS OF JAPAN vol. 006, no. 204 (M-164), 15 October 1982 (1982-10-15) & JP 57 109618 A (DAINIPPON INSATSU KK), 8 July 1982 (1982-07-08)

## Description

### Background of the Invention

### Field of the Invention

The present invention relates to a method for manufacturing a plastic optical device, and more particularly the invention relates to a method for manufacturing a plastic optical device formed on a substrate by molding.

### Description of the Prior Art

Plastic optical devices have been applied to, for example, the screen of a rear television, the backlight plate of a LCD display, the fresnel lens, and the micro lens on the light valve.

A plastic optical device, such as the fresnel lens with the concentric saw-toothed pattern, can be formed by a tool bit. However, plastic optical devices formed using this method lack precision and are difficult to dispose on a large plastic substrate. US Patent 5,840,352 discloses a fresnel lens made of plastic material by injection molding. The use of this method can result in the generation of residual stresses during the high temperature manufacturing process. If the area of the plastic optical device is large, the temperature gradient between intermediate and periphery of the plastic optical device during the cooling process can cause distortion when the force is removed.

US Patent 5,903,399 and 5,870,224 reveal the use of ultraviolet illuminating on resin material, wherein illumination of the resin hardens it to form a predetermined shape. However, the UV lamps used to harden the resin are expensive.

US Patent 5,815,327 reveals the use of photolithography to form a plastic optical device of cylindrical structure (or ladder). However, the desired shape of a plastic optical device cannot be precisely formed using this method. Thus, the plastic optical devices formed by this method have low utilization efficiency.

US-5,903,399 and US-5,702,819 disclose further methods for forming single-sided plastic optical devices. JP-A- 5 7109 618, US-3 594 457, and FR, 1 390 512 disclose methods for forming double sided plastic optical devices.

### Summary of the Invention

Therefore, the present invention provides a method for manufacturing a double-sided plastic optical device on a substrate having a first surface and a second surface, comprising the steps of: providing a first mold with a first group of mold cavities, wherein the structure of the first group of mold cavities is the reverse of the structure of a desired first optical structure; filling a first shaping material in the first group of mold cavities of the first mold; joining the first mold with the first surface of the substrate; providing a second mold with a second group of mold cavities, wherein the structure of the second group of mold cavities is the reverse of the structure of a desired second optical structure; filling a second shaping material in the second group of mold cavities of the second mold; joining the second mold with the second surface of the substrate; hardening the first shaping material and the second shaping material; and removing the first mold and the second mold to obtain the double sided plastic optical device.

The present invention has an advantage of eliminating residual stresses. Because the plastic optical device is hardened at room temperature during the manufacturing process, a temperature gradient is small between the central part and the periphery of the plastic optical device in manufacturing process. Thus, distortion is avoided.

The present invention has a further advantage of prolonging the life span of a mold. All the manufacturing process can be accomplished at room temperature, so the mold doesn't go through the temperature-induced metal fatigue. The present invention has a further advantage of reducing production costs because the hardening step does not require expensive ultraviolet or photolithography equipment.

The present invention can be applied to the formation of plastic optical devices of any dimension. Furthermore, the method disclosed herein forms a plastic optical component with two-sided pattern. It is very difficult to form a plastic optical component with two-sided pattern using ultraviolet illumination because the mold is non-transparent. In addition, by adjusting the ambient temperature during the manufacturing process of the present invention, the hardening time can be adjusted, wherein a higher ambient temperature reduces hardening time. Thus, productivity can be easily adjusted.

### Brief Description of the Drawings

This and other objects and features of this invention will become clear from the following description, taken in conjunction with the preferred embodiments with reference to the accompanied drawings in which:
Fig. 1 is a cross-sectional view of a plastic optical device;
Fig. 2A to Fig. 2H is a schematic view illustrating the steps for forming the device of fig. 1;
Fig. 3 is a cross-sectional view of the two-sided plastic optical device formed according to a first embodiment of the present invention;
Fig. 4A to Fig. 4M is a schematic view illustrating the steps of the first embodiment of the present invention;
Fig. 5 is a cross-sectional view of a plastic optical device;
Fig. 6A to Fig. 6H is a schematic view illustrating the steps of the second embodiment of the present invention;

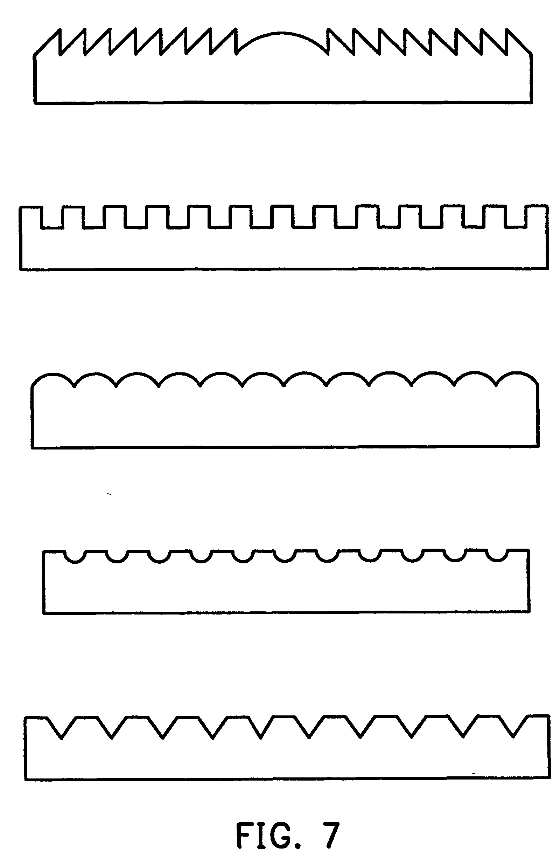

Fig. 7 is a schematic view showing the various structures of the plastic optical device that may be obtained by the present invention, such as a saw-toothed fresnel lens, a lenticular lens, a cylindrical lens, a spherical lens, an asphere lens, a pyramidal lens, etc.
Fig. 8 is a schematic view showing a pressure generator applied in the present invention.

### Description of the Preferred Embodiments

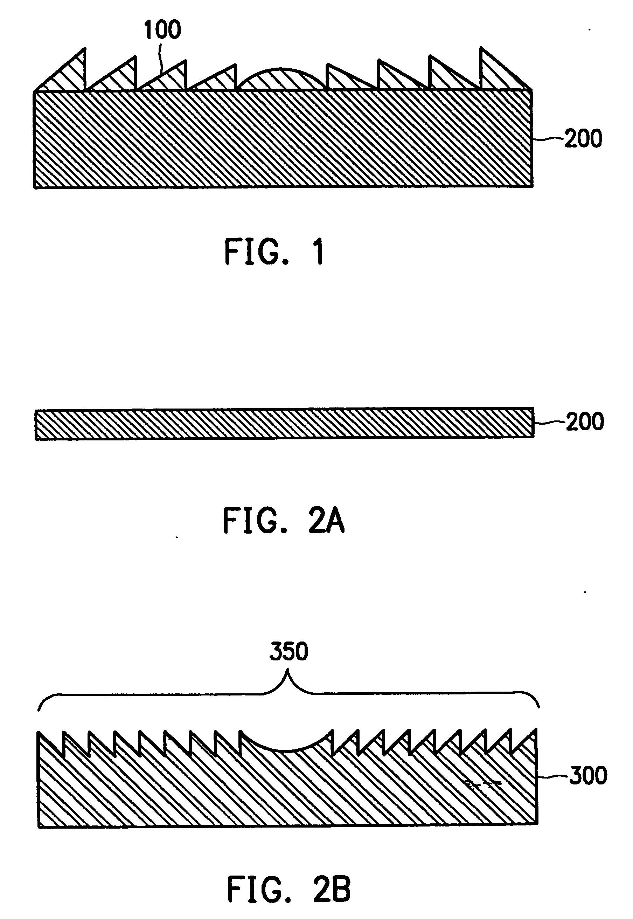

Fig. 1 is a cross-sectional view of a plastic optical device. As shown in Fig. 1, the plastic optical device comprises a substrate 200 and an optical structure 100. The transmittance and refraction index of a substrate 200 is decided by the optical designer.

Fig. 2A to Fig. 2F illustrate the steps for forming the device.

As shown in Fig. 2A, a substrate 200 is provided. The substrate 200 is made of a material such as acrylic, glass, or resin.

Next, as shown in Fig. 2B, a mold 300 is provided. The mold 300 is provided with mold cavities 350 by precision CNC machining or electric discharge machining. The structure of mold cavities 350 is the reverse of the desired structure of the plastic optical structure.

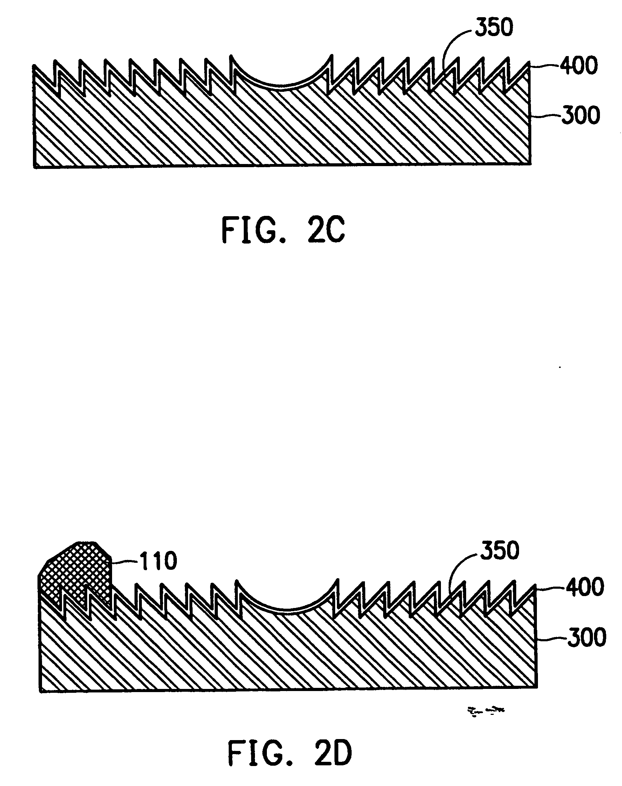

Next, as shown in Fig. 2C, a film 400 is formed in the mold cavities 350 of a mold 300. The film 400 prevents shaping material 110 from adhering to mold 300 during the hardening step.

Next, as shown in Fig. 2D, shaping material 110 is filled in the mold cavities 350 of a mold 300. Shaping material 110 comprises a resin material and an activator mixed together in appropriate proportion.

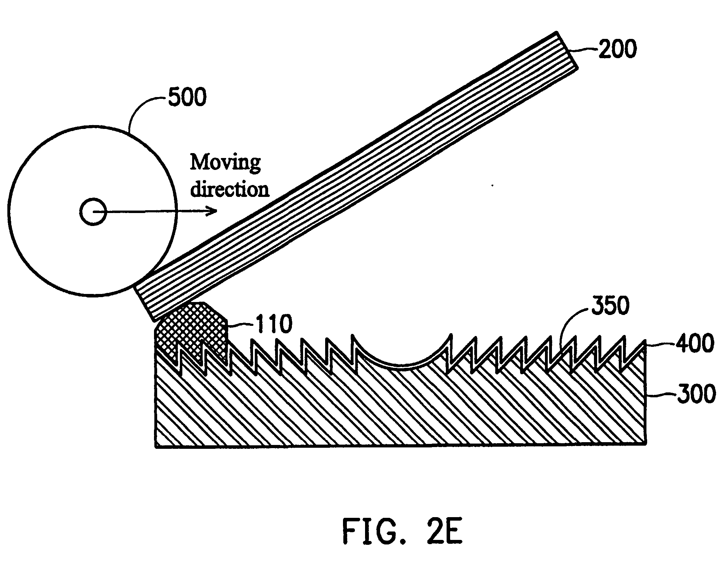

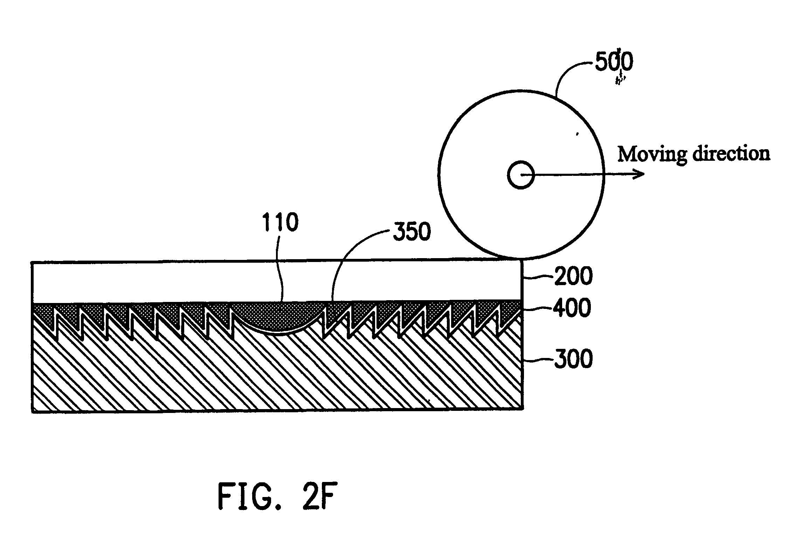

Next, as shown in Fig. 2E and Fig. 2F, the mold 300 is joined with the substrate 200, the mold 300. The shaping material 110 fills the mold cavities 350 of the mold 300 by action of the roller 500 rolled on the substrate 200. The roller rolled on a substrate also removes the bubbles from the shaping material 110.

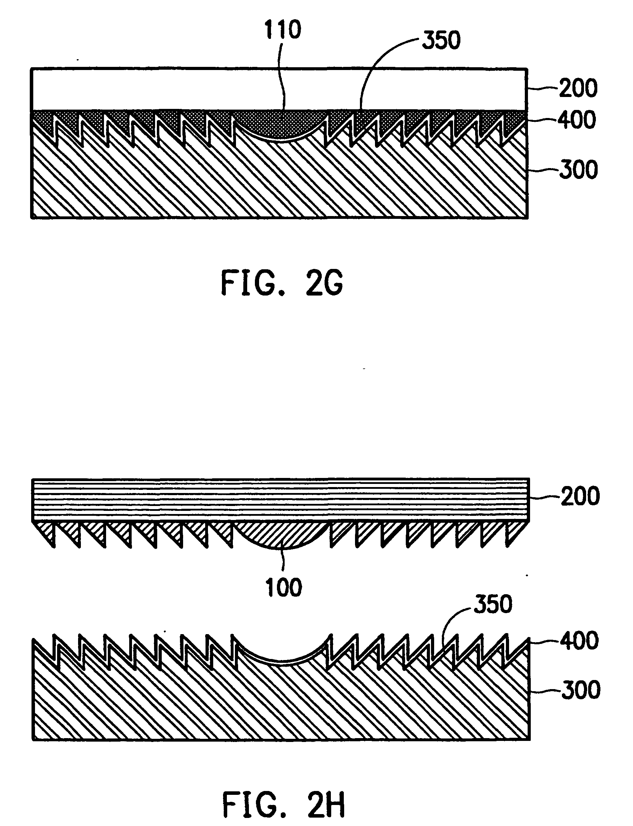

Next, the shaping material 110 is hardened and adhered to the substrate 200 (Fig. 2G). This can take, for example, approximately 30 minutes.

Finally, a plastic optical device is obtained by removing the mold, as shown in Fig. 2H.

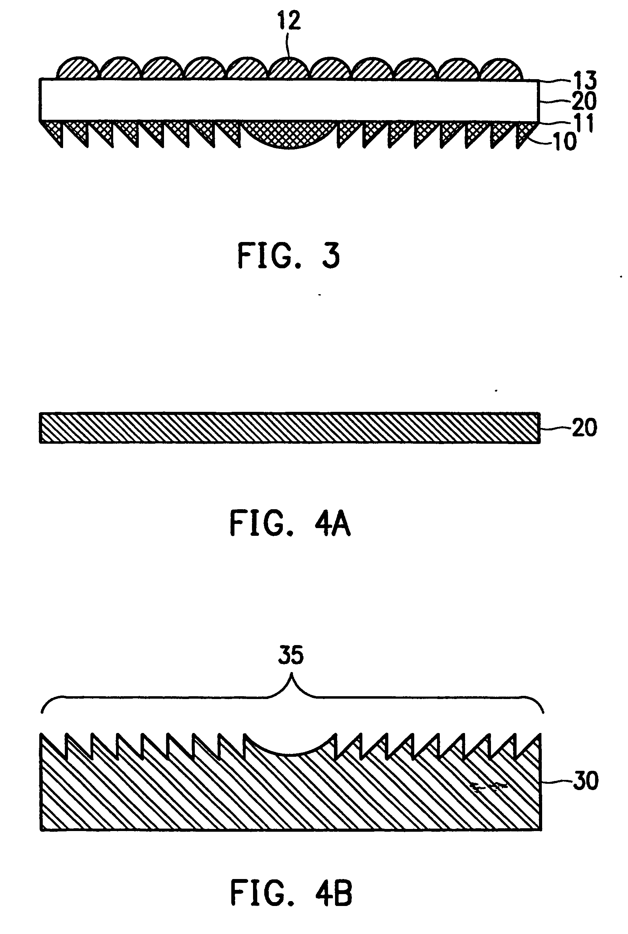

Fig. 3 is a cross-sectional view of the two-sided plastic optical device formed according to the first embodiment of the present invention. As shown in Fig. 3, a two-sided plastic optical device comprises a substrate 20, a first optical structure 10 and a second optical structure 12. The first optical structure 10 and the second optical structure 12 are formed respectively on a first surface 11 and a second surface 13 of the substrate 20.

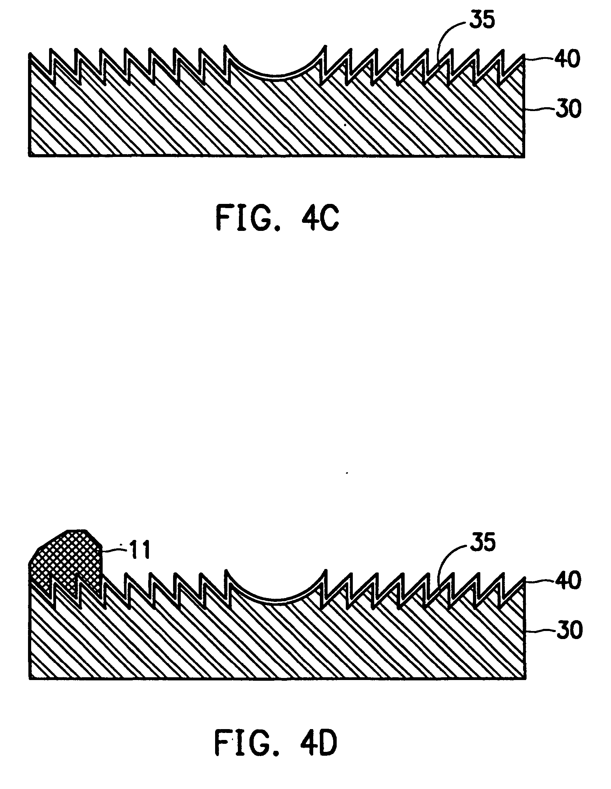

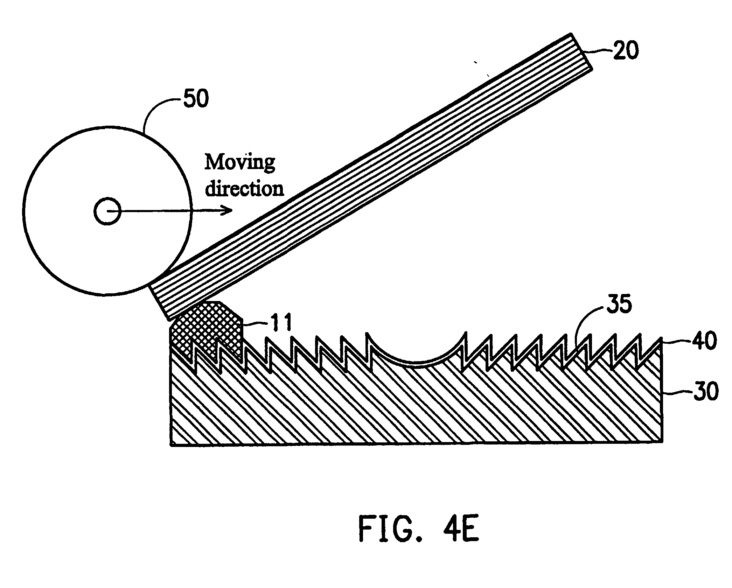

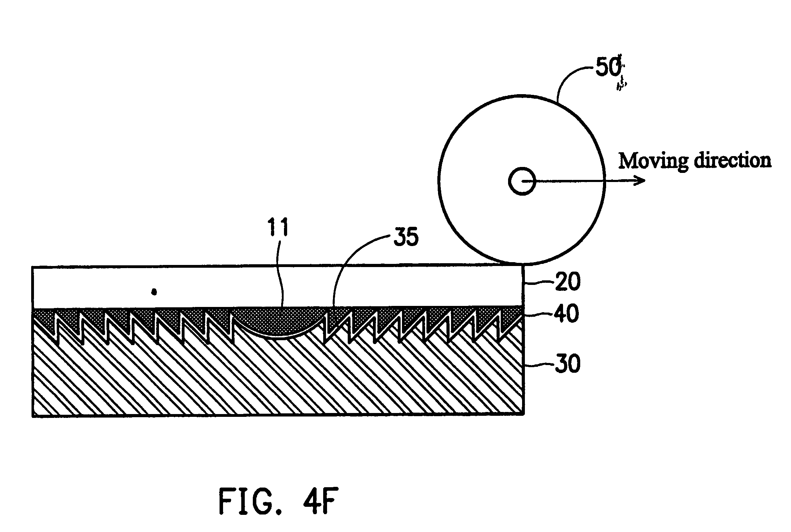

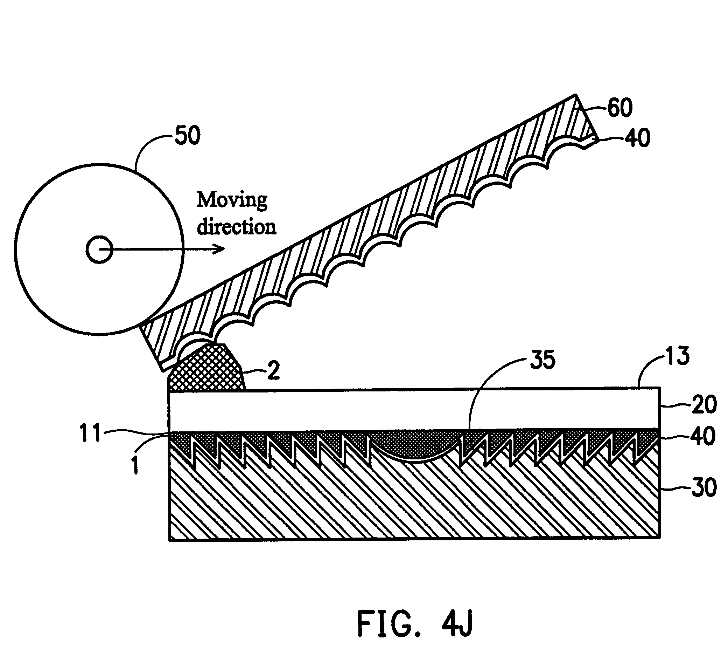

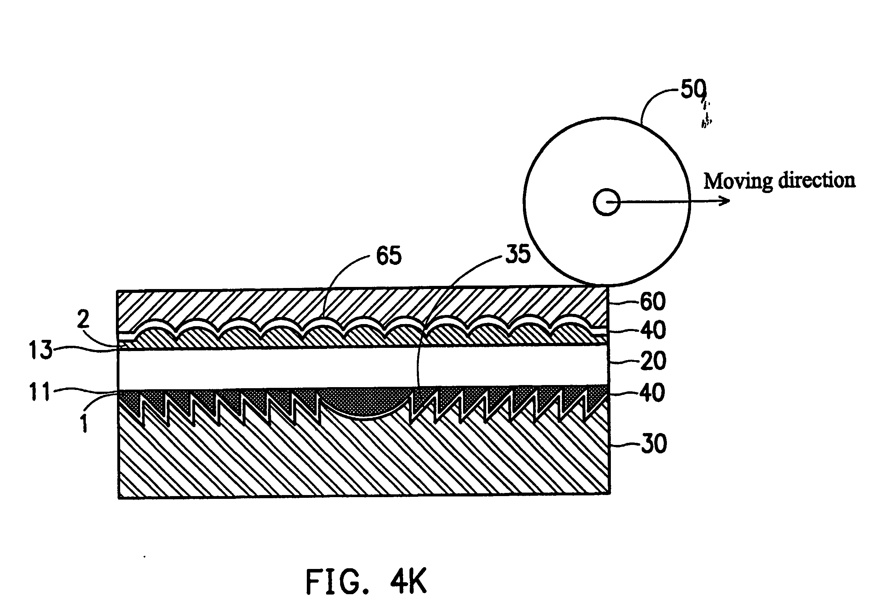

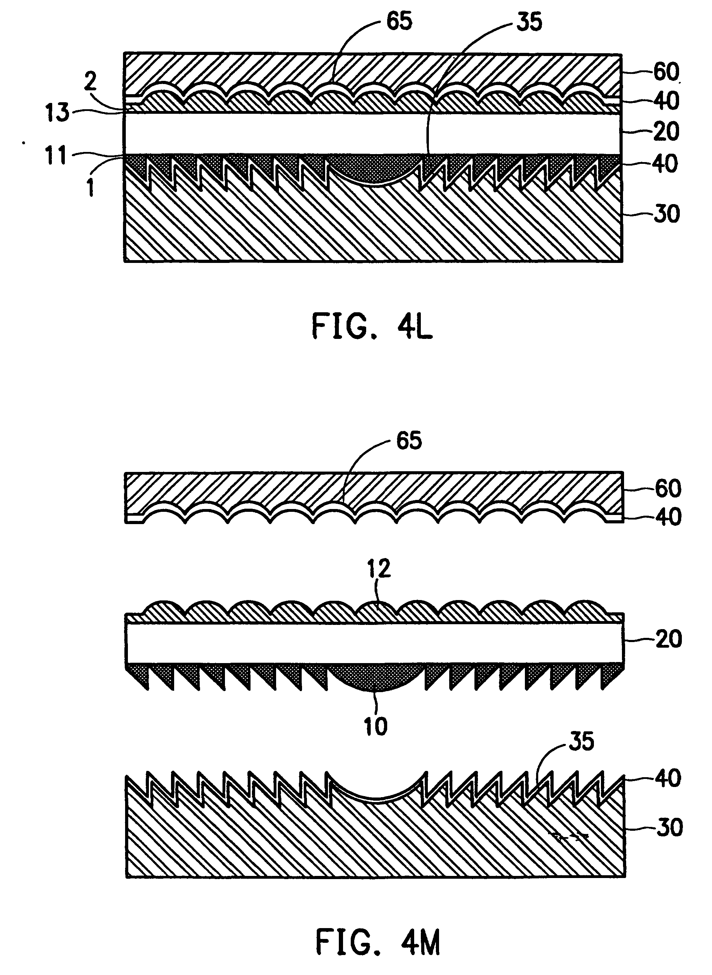

Fig. 4A to Fig. 4M illustrate the steps of the first embodiment of the present invention.

In the first embodiment, Fig. 4A to Fig. 4F illustrate the formation for the first optical structure 10. Since they are the same as Fig. 2A to Fig. 2F, a detailed description is omitted.

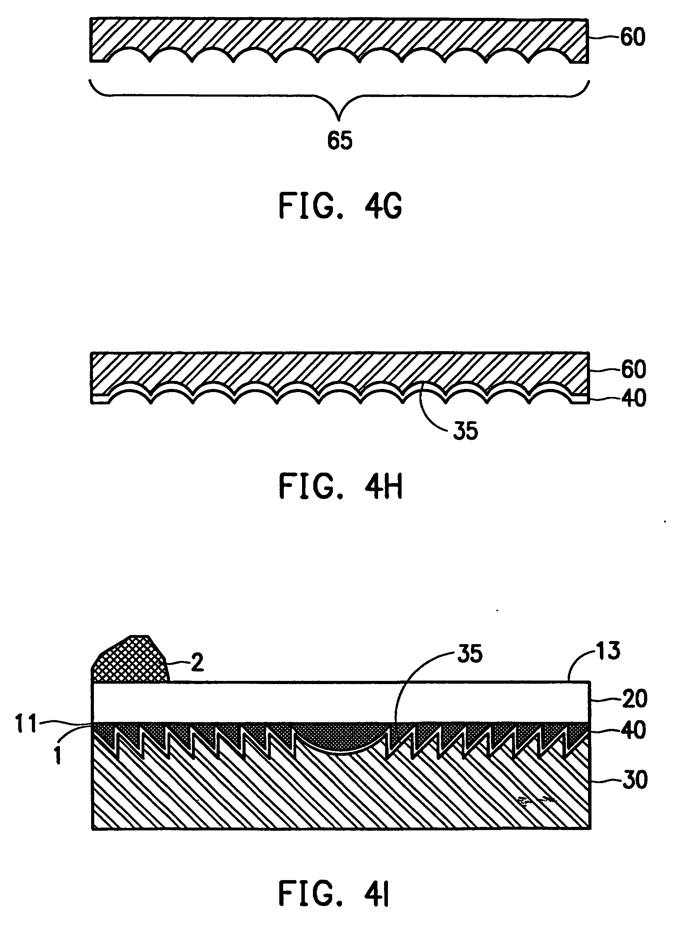

As shown in Fig. 4G, a second mold 60 is provided. The second mold 60 is provided with mold cavities 65 by precision CNC machining or electric discharge machining. The structure of mold cavities 65 is the reverse of the desired structure of the plastic optical structure.

Next, as shown in Fig. 4H, a film 40 is formed in mold cavities 65 of a second mold 60. The film 40 prevents shaping material 12 from adhering to the second mold 60 during the hardening step.

As shown in Fig. 4I, second shaping material 2 is filled in the mold cavities 65 of a mold 60. Second shaping material 2 comprises a resin material and an activator mixed together in any proportion.

Next, as shown in Fig. 4J and Fig. 4K, the second mold 60 is joined with the substrate 20. The second shaping material 2 fills mold cavities 65 of the second mold 60 by action of the roller 50 rolled on the second mold 60. The roller 50 rolled on the second mold 60 can also remove the bubbles from the second shaping material 2.

Next, the second shaping material 2 is hardened and adhered to the second surface of a substrate 20, which takes, for example, about 30 minutes (Fig. 4L).

Finally, a two-sided plastic optical device is formed by removing the mold, as shown in Fig. 4M.

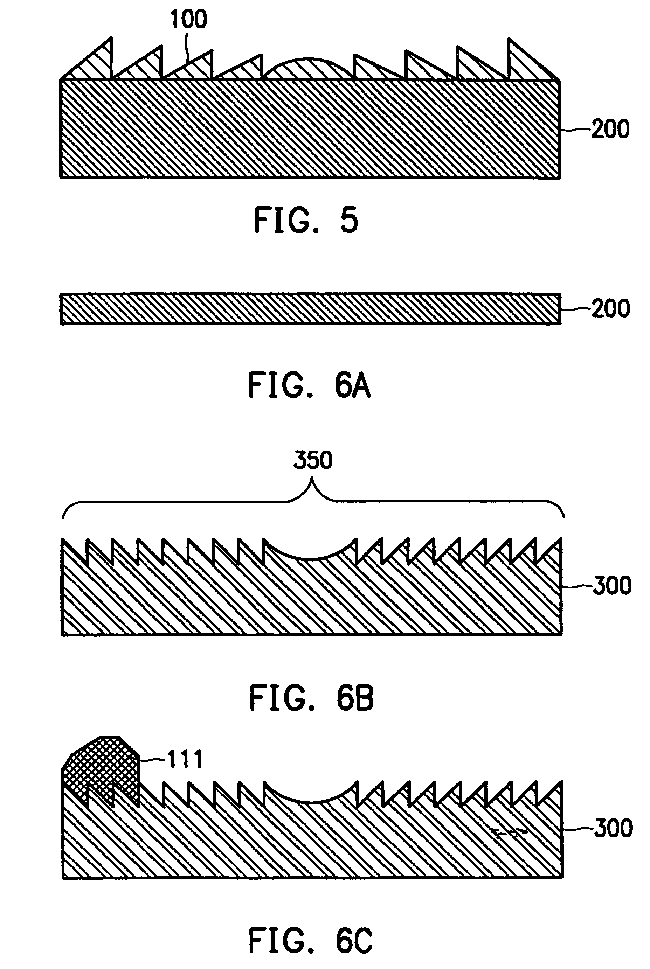

Fig. 5 is a cross-sectional view of a plastic optical device. As shown in Fig. 5, the plastic optical device comprises a substrate 200 and an optical structure 100.

Fig. 6A to Fig. 6E illustrate the steps of the second embodiment of the present invention.

As shown in Fig. 6A, a substrate 200 is provided. The substrate 200 is made of a material such as acrylic, glass, or resin, etc. The transmittance of the substrate 200 can be selected according to the needs of the optical device.

Next, as shown in Fig. 6B, a mold 300 is provided. The mold 300 is provided with mold cavities 350 by precision CNC machining or electric discharge machining. The structure of mold cavities 350 is the reverse of the desired structure of the plastic optical structure.

Next, as shown in Fig. 6C, shaping material 111 is filled in the mold cavities 350 of a mold 300. Shaping material 111 comprises a resin material, an activator and an anti-adherence solution, wherein the shaping material 111 is mixed in any proportion.

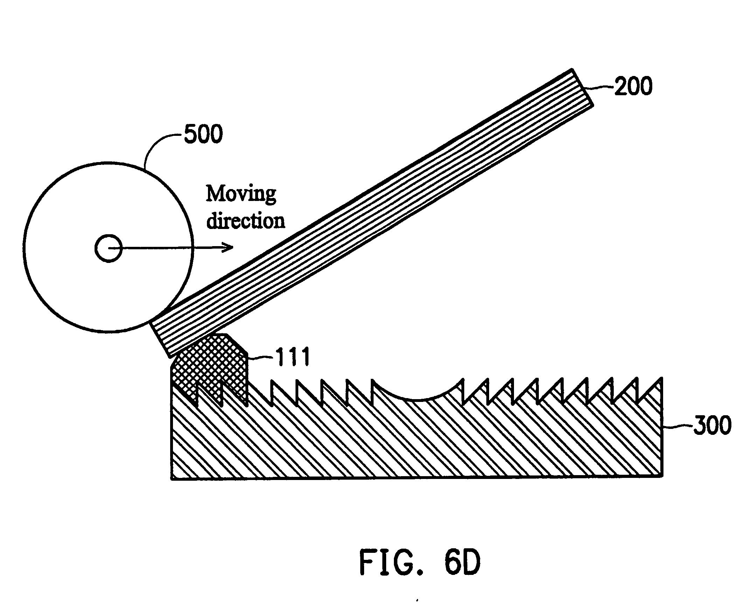

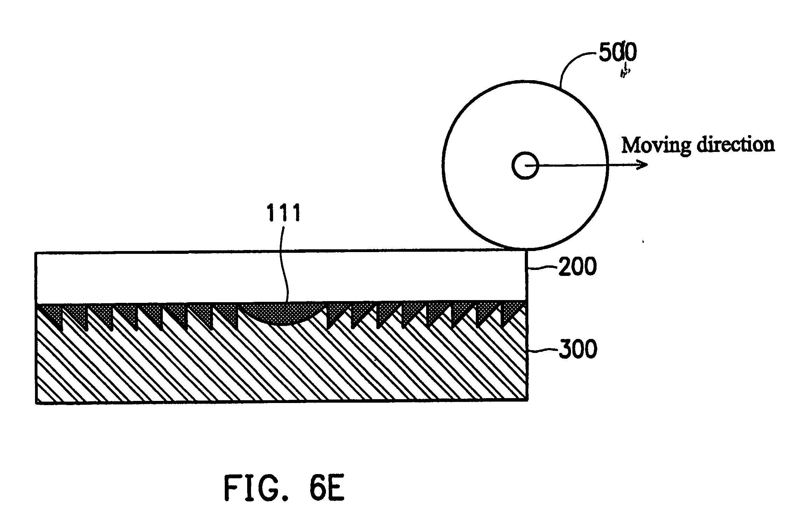

Next, as shown in Fig. 6D and Fig. 6E, a roller 500 is rolled on the substrate 200. After the mold 300 fit the position of the substrate 200, the mold 300 is joined with the substrate 200. The shaping material 111 will fill mold cavities 350 of the mold 300 by action of the roller 500 rolled on a substrate 200. The roller rolled on a substrate can remove the bubbles from the shaping material 110.

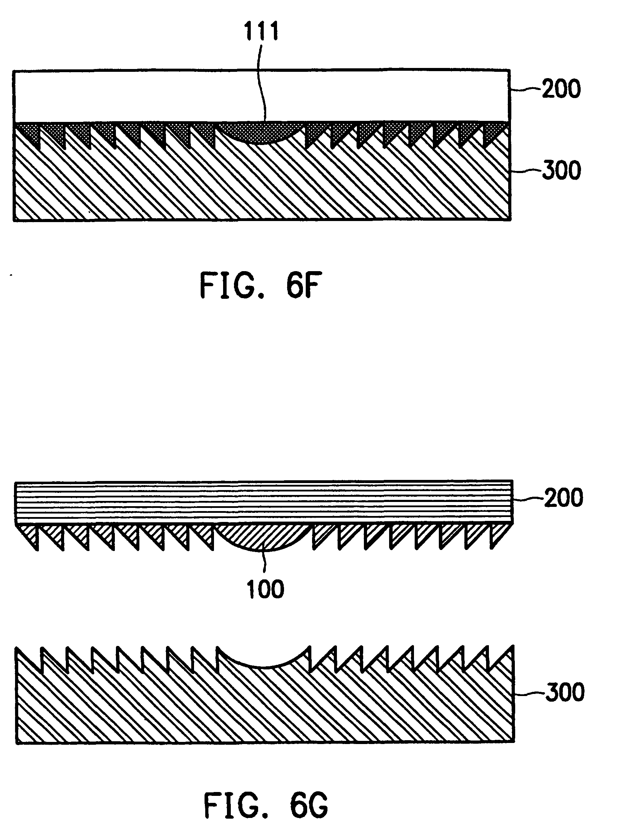

Next, as shown in Fig. 6F, the shaping material 111 is hardened and adhered to the substrate 200 after about 30 minutes.

Next, a plastic optical device is obtained by removing the mold, as shown in Fig. 6G.

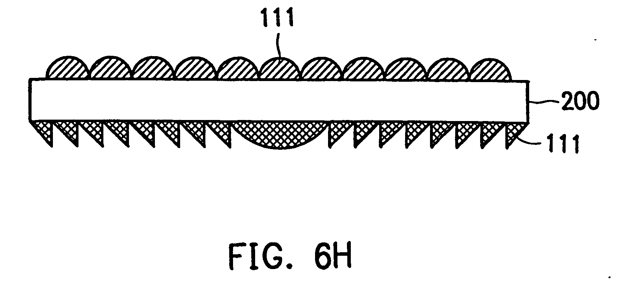

Fig. 6H shows the formation of a two-sided plastic optical device with the shaping material 111.

In the first embodiment of the present invention, the refractive index and the transmittance of the optical structure can be changed by the mixture of the different proportions of resin and activator. In the second embodiment of the present invention, the refractive index and the transmittance of the optical structure can also be changed by the mixture of the different proportions of resin, activator and anti-adherence solution. Different substrates can be utilized to change the transmittance and the spectrum.

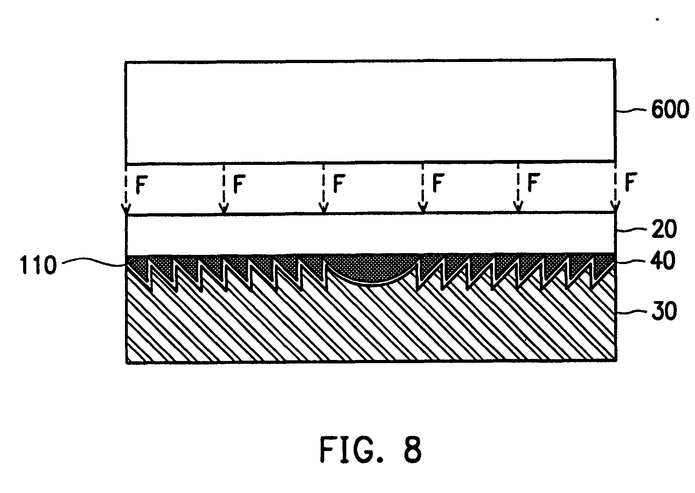

In the first and second embodiment of the present invention, a pressure generator applies force on the substrate after the shaping material is filled in the mold cavities of a mold or on the substrate. Therefore, the shaping material fills all the mold cavities of a mold and the force removes all the bubbles in the shaping material. As shown in Fig. 8, a pressure generator 600 can cause uniform force to fill all the mold cavities with shaping material and remove all the bubbles from the material.

In the method of the invention, all the steps can be carried out at room temperature. It is not necessary for the mold to be heated, so the invention can prolong life span of a mold. Moreover, a temperature gradient is small between the central part and the periphery of the plastic optical device in manufacturing process. Thus, residual stresses won't be generated in the shaping material, avoiding distortion.

On the other hand, in the manufacturing process of the present invention, the temperature can be raised to increase the productivity. As the temperature rises, the time of hardening shaping material shortens. The preferred temperature range for forming optical structure by the shaping material is 10°C-80°C.

## Claims

1. A method for manufacturing a double sided plastic optical device on a substrate (20,200) having a first surface and a second surface, comprising the steps of:
providing a first mold (30,300) with a first group of mold cavities, wherein the structure of the first group of mold cavities is the reverse of the structure of a desired first optical structure;
filling a first shaping material (11,111) in the first group of mold cavities of the first mold;
joining the first mold with the first surface of the substrate;
providing a second mold (60) with a second group of mold cavities, wherein the structure of the second group of mold cavities is the reverse of the structure of a desired second optical structure;
filling a second shaping material (2) in the second group of mold cavities of the second mold;
joining the second mold with the second surface of the substrate;
hardening the first shaping material and the second shaping material; and
removing the first mold and the second mold to obtain the double sided plastic optical device.

2. A method for manufacturing a plastic optical device according to claim 1, further including a step of generating a force on the substrate by a pressure generator after the first joining step in order to fill the first group of mold cavities with the first shaping material and remove the bubbles in the first shaping material.

3. A method for manufacturing a plastic optical device according to claim 1, further including a step of generating a force on the substrate by a pressure generator after the second joining step in order to fill the second group of mold cavities with the second shaping material and remove the bubbles in the second shaping material.

4. A method for manufacturing a plastic optical device according to claim 1, wherein the first shaping material comprises a resin and an activator.

5. A method for manufacturing a plastic optical device according to claim 1, wherein the second shaping material comprises a resin and an activator.

6. A method for manufacturing a plastic optical device according to claim 1, further including a step of forming a film in the first group of mold cavities to prevent the hardened first shaping material form adhering to the first mold.

7. A method for manufacturing a plastic optical device according to claim 1, further including a step of forming a film in the second group of mold cavities to prevent the hardened second shaping material from adhering to the second mold.

8. A method for manufacturing a plastic optical device according to claim 1, wherein the first shaping material comprises a resin, an activator and an anti-adherence solution.

9. A method for manufacturing a plastic optical device according to claim 1, wherein the second shaping material comprises a resin, an activator and an anti-adherence solution.

10. A method for manufacturing a plastic optical device according to claim 1, wherein the temperature during the formation of the first optical structure is in the range from 10°C-80°C.

11. A method for manufacturing a plastic optical device according to claim 1, wherein the temperature during the formation of the second optical structure is in the range from 10°C-80°C.

12. A method for manufacturing a plastic optical device according to claim 2 or 3, wherein the pressure generator is a roller.

## Patentansprüche

1. Verfahren zum Herstellen eines doppelseitigen, optischen Kunststoffbauteils auf einem Substrat (20, 200) mit einer ersten Oberfläche und einer zweiten Oberfläche, umfassend die Schritte:
Bereitstellen einer ersten Form (30, 300) mit einer ersten Gruppe von Formhohlräumen, wobei die Struktur der ersten Gruppe von Formhohlraumen umgekehrt zu der Struktur einer gewünschten ersten optischen Struktur ist;
Füllen eines ersten Formmaterials (11, 111) in die erste Gruppe von Formhohlräumen der ersten Form;
Verbinden der ersten Form mit der ersten Oberfläche des Substrats;
Bereitstellen einer zweiten Form (60) mit einer zweiten Gruppe von Formhohlraumen, wobei die Struktur der zweiten Gruppe von Formhohlraumen umgekehrt zu der Struktur einer gewunschten zweiten optischen Struktur ist;
Fullen eines zweiten Formmaterials (2) in die zweite Gruppe von Formhohlräumen der zweiten Form;
Verbinden der zweiten Form mit der zweiten Oberflache des Substrats;
Ausharten des ersten Formmaterials und des zweiten Formmaterials; und
Beseitigen der ersten Form und der zweiten Form, um das doppelseitige, optische Kunststoffbauteil zu erhalten.

2. Verfahren zum Herstellen eines optischen Kunststoffbauteils nach Anspruch 1, ferner umfassend einen Schritt des Erzeugens einer Kraft auf das Substrat durch einen Druckerzeuger nach dem ersten Verbindungsschritt, um die erste Gruppe von Formhohlraumen mit dem ersten Formmaterial zu fullen und die Blasen in dem ersten Formmaterial zu beseitigen.

3. Verfahren zum Herstellen eines optischen Kunststoffbauteils nach Anspruch 1, ferner umfassend einen Schritt des Erzeugens einer Kraft auf das Substrat durch einen Druckerzeuger nach dem zweiten Verbindungsschritt, um die zweite Gruppe von Formhohlraumen mit dem zweiten Formmaterial zu füllen und die Blasen in dem zweiten Formmaterial zu beseitigen.

4. Verfahren zum Herstellen eines optischen Kunststoffbauteils nach Anspruch 1, bei dem das erste Formmaterial ein Harz und einen Aktivator aufweist.

5. Verfahren zum Herstellen eines optischen Kunststoffbauteils nach Anspruch 1, bei dem das zweite Formmaterial ein Harz und einen Aktivator aufweist.

6. Verfahren zum Herstellen eines optischen Kunststoffbauteils nach Anspruch 1, ferner umfassend einen Schritt zum Bilden eines Films in der ersten Gruppe von Formhohlraumen, um zu verhindern, dass das ausgehärtete, erste Formmaterial an der ersten Form anhaftet.

7. Verfahren zum Herstellen eines optischen Kunststoffbauteils nach Anspruch 1, ferner umfassend einen Schritt zum Bilden eines Films in der zweiten Gruppe von Formhohlraumen, um zu verhindern, dass das ausgehärtete, zweite Formmaterial an der zweiten Form anhaftet.

8. Verfahren zum Herstellen eines optischen Kunststoffbauteils nach Anspruch 1, bei dem das erste Formmaterial ein Harz, einen Aktivator und eine Anti-Anhaftlosung aufweist.

9. Verfahren zum Herstellen eines optischen Kunststoffbauteils nach Anspruch 1, bei dem das zweite Formmaterial ein Harz, einen Aktivator und eine Anti-Anhaftlbsung aufweist.

10. Verfahren zum Herstellen eines optischen Kunststoffbauteils nach Anspruch 1, bei dem die Temperatur während der Bildung der ersten optischen Struktur im Bereich von 10 °C bis 80 °C liegt.

11. Verfahren zum Herstellen eines optischen Kunststoffbauteils nach Anspruch 1, bei dem die Temperatur während der Bildung der zweiten optischen Struktur im Bereich von 10 °C bis 80 °C liegt.

12. Verfahren zum Herstellen eines optischen Kunststoffbauteils nach Anspruch 2 oder 3, bei dem der Druckerzeuger eine Walze ist.

## Revendications

1. Procédé de fabrication d'un dispositif optique en matière plastique à doublé face, sur un substrat (20, 200) présentant une première surface et une seconde surface, le procédé comprenant les étapes :
d'approvisionnement d'un premier moule (30, 300) ayant un premier groupe de cavités de moulage, dans lequel la structure du premier groupe de cavités de moulage est l'inverse de la structure d'une première structure optique désirée ;
de charge d'une première matière de mise en forme (11, 111) dans le premier groupe de cavités de moulage du premier moule ;
de montage du premier moule sur la première surface du substrat ;
d'approvisionnement d'un second moule (60) ayant un second groupe de cavités de moulage, dans lequel la structure du second groupe de cavités de moulage est l'inverse de la structure d'une seconde structure optique désirée ;
de charge d'une seconde matière de mise en forme (2) dans le second groupe de cavités de moulage du second moule ;
de montage du second moule sur la seconde surface du substrat ;
de durcissement de la première matière de mise en forme et de la seconde matière de mise en forme ; et
d'enlèvement du premier moule et du second moule, afin d'obtenir le dispositif optique en matière plastique à double face.

2. Procédé de fabrication d'un dispositif optique en matière plastique selon la revendication 1, comprenant en outre une étape d'application d'une force sur le substrat, par un élément d'application de pression, après la première étape de montage, afin de remplir le premier groupe de cavités de moulage avec la première matière de mise en forme, et d'éliminer les bulles présentes dans la première matière de mise en forme.

3. Procédé de fabrication d'un dispositif optique en matière plastique selon la revendication 1, comprenant en outre une étape d'application d'une force sur le substrat, par un élément d'application de pression, après la seconde étape de montage, afin de remplir le second groupe de cavités de moulage avec la seconde matière de mise en forme, et d'éliminer les bulles présentes dans la seconde matière de mise en forme.

4. Procédé de fabrication d'un dispositif optique en matière plastique selon la revendication 1, dans lequel la première matière de mise en forme comprend une résine et un activateur.

5. Procédé de fabrication d'un dispositif optique en matière plastique selon la revendication 1, dans lequel la seconde matière de mise en forme comprend une résine et un activateur.

6. Procédé de fabrication d'un dispositif optique en matière plastique selon la revendication 1, comprenant en outre une étape de formation d'un film dans le premier groupe de cavités de moulage, afin d'empêcher que la première matière de mise en forme, à l'état durci, n'adhère au premier moule.

7. Procédé de fabrication d'un dispositif optique en matière plastique selon la revendication 1, comprenant en outre une étape de formation d'un film dans le second groupe de cavités de moulage, afin d'empêcher que la seconde matière de mise en forme, à l'état durci, n'adhère au second moule.

8. Procédé de fabrication d'un dispositif optique en matière plastique selon la revendication 1, dans lequel la première matière de mise en forme comprend une résine, un activateur et une solution antiadhésive.

9. Procédé de fabrication d'un dispositif optique en matière plastique selon la revendication 1, dans lequel la seconde matière de mise en forme comprend une résine, un activateur et une solution antiadhésive.

10. Procédé de fabrication d'un dispositif optique en matière plastique selon la revendication 1, dans lequel la témpérature, pendant la formation de la première structure optique, est comprise dans la plage de 10 °C à 80 °C.

11. Procédé de fabrication d'un dispositif optique en matière plastique selon la revendication 1, dans lequel la température, pendant la formation de la seconde structure optique, est comprise dans la plage de 10 °C à 80 °C.

12. Procédé de fabrication d'un dispositif optique en matière plastique selon la revendication 2 ou 3, dans lequel l'élément d'application de pression est un rouleau.
